(19) Europäisches Patentamt
European Patent Office
Office européen des brevets

(11) **EP 2 219 813 B1**

(12) **EUROPÄISCHE PATENTSCHRIFT**

(45) Veröffentlichungstag und Bekanntmachung des Hinweises auf die Patenterteilung:
**29.08.2012   Patentblatt 2012/35**

(51) Int Cl.:
***B23K 15/08*** *(2006.01)*      ***F16C 29/02*** *(2006.01)*
***F16C 32/06*** *(2006.01)*

(21) Anmeldenummer: **08848682.4**

(22) Anmeldetag: **31.10.2008**

(86) Internationale Anmeldenummer:
**PCT/EP2008/064761**

(87) Internationale Veröffentlichungsnummer:
**WO 2009/062851 (22.05.2009 Gazette 2009/21)**

(54) **AEROSTATISCHES LAGER UND VERFAHREN ZU DESSEN HERSTELLUNG**

AEROSTATIC BEARING AND METHOD FOR PRODUCTION THEREOF

PALIER AÉROSTATIQUE ET PROCÉDÉ DE FABRICATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.11.2007   DE 102007054334**

(43) Veröffentlichungstag der Anmeldung:
**25.08.2010   Patentblatt 2010/34**

(73) Patentinhaber:
• **BSH Bosch und Siemens Hausgeräte GmbH
81739 München (DE)**
• **Robert Bosch GmbH
70442 Stuttgart-Feuerbach (DE)**

(72) Erfinder:
• **GRAF, Ulrich
74321 Bietigheim-Bissingen (DE)**
• **OSTRINSKY, Jörn
70839 Gerlingen (DE)**
• **WOLF, Andreas
70499 Stuttgart (DE)**
• **GIACCHI, Marco
73550 Waldstetten (DE)**
• **MAYERSHOFER, Christian
89355 Gundremmingen (DE)**
• **SCHUBERT, Jan-Grigor
50259 Pulheim (DE)**

(56) Entgegenhaltungen:
WO-A1-2004/055400      DE-A1-102006 009 268
DE-C- 841 381      DE-C1- 4 436 156

EP 2 219 813 B1

**Beschreibung**

Die vorliegende Erfindung betrifft ein aerostatisches Lager und ein Verfahren zur Herstellung von Mikrobohrungen, das insbesondere bei der Fertigung des aerostatischen Lagers anwendbar ist.

Aerostatische Lager basieren darauf, dass zwischen zwei Lagerkörper Luft oder ein anderes Gas eingeblasen wird. Durch den resultierenden Staudruck entsteht zwischen den beiden Lagerkörpern ein Spalt, die unmittelbare Berührung der Lagerkörper wird also vermieden. Es wird somit möglich, bei geringen Reibkräften Relativbewegungen zwischen den Lagerkörpern durchzuführen und somit verschleißarme Lager mit hohem Wirkungsgrad zu realisieren. Ein Zuführungskanal zum Einspeisen der Luft oder eines anderen Gases in den Lagerspalt verläuft durch einen der beiden Lagerkörper, im Folgenden als Führungselement bezeichnet. Zur Aufrechterhaltung des Gaskissens zwischen den Lagerkörpern muss fortwährend Arbeit geleistet werden. Um den Gasverbrauch - und damit den Energieverbrauch - des Lagers gering zu halten bzw. eine hohe Tragkraft des Lagers zu erreichen, ist diese Zuführung in der Regel so ausgelegt, dass Düsen des Zuführungskanals in einer dem anderen Lagerkörper zugewandten Oberfläche des Führungselements, im Folgenden als Lagerfläche bezeichnet, zugewandt angeordnet werden und die engste Stelle der Zuführung darstellen.

Aus DE 44 36 156 C1 ist ein aerostatisches Lager bekannt, dessen Düsen durch Laserstrahlung entsprechend dem Oberbegriff von Anspruch 12 erzeugte Mikrobohrungen sind. Die Mikrobohrungen weisen einen kegeligen Querschnitt auf, wobei der engste Querschnitt der Düsen unmittelbar an der Lagerfläche liegt. Aufgrund der kegeligen Querschnittsform wächst die zur Erzeugung der Mikrobohrungen abzutragende Materialmenge nicht linear mit der Stärke des Führungselements an, sondern mit deren dritter Potenz. Dementsprechend wächst auch die zum Erzeugen der Mikrobohrungen erforderliche Bearbeitungszeit mit der dritten Potenz der Stärke. Das Verfahren ist daher im Wesentlichen nur bei geringen Stärken des Führungselements wirtschaftlich anwendbar. Dementsprechend zeigen die Figuren der DE 44 36 156 C1 Wandstärken, die in etwa dem Bohrungsdurchmesser entsprechen.

Ein weiteres Problem der kegeligen Bohrungsform ist, dass bei einem hoch belasteten Lager die Lagerplatte eine hohe Wandstärke haben muss, um hinreichend formstabil zu sein. Um einen Kontakt der Lagerkörper sicher zu vermeiden, wird aber gleichzeitig eine hohe Dichte von Düsen benötigt, die aufgrund ihrer Kegelform die Lagerplatte stark schwächen bzw. die maximal realisierbare Wandstärke begrenzen.

Noch ein Nachteil eines aerostatischen Lagers mit der aus DE 44 36 156 C1 bekannten kegeligen Düsengeometrie ergibt sich aus der Tatsache, dass der Gasdurchsatz durch eine Düse durch die an ihr anliegende Druckdifferenz und den Düsenquerschnitt eindeutig bestimmt ist. Ein minimaler Austrittsquerschnitt der Düse ist vorgegeben durch die Parameter des zum Bohren verwendeten Laserstrahls. Ist bei der Auslegung eines Lagers außerdem die Position und die Anzahl der Düsen vorgegeben, so resultiert daraus ein Gasverbrauch des Lagers, der im Betrieb nicht mehr unterschritten werden kann und der eine obere Grenze für den Wirkungsgrad eines mit dem aerostatischen Lager realisierbaren Linearverdichters vorgibt.

Ein Lager gemäß Oberbegriff von Anspruch 1 ist aus WO 2004/055400 A1 bekannt. Aufgabe der Erfindung ist zum einen, ein aerostatisches Lager anzugeben, das sowohl mechanisch robust als auch in kurzer Zeit wirtschaftlich fertigbar ist. Eine weitere Aufgabe ist, ein Verfahren zum Erzeugen von Bohrungen, insbesondere in einem Führungselement eines solchen aerostatischen Lagers anzugeben.

Die erste Aufgabe wird gelöst, indem bei einem aerostatisches Lager mit einem mit Bohrungen versehenen Führungselement und einem entlang einer Oberfläche des Führungselements bewegbaren Körper die Bohrungen entsprechend den Merkmalen des Anspruchs 1 ausgeführt sind. Der Widerstand, den eine solche Bohrung einem hindurchströmendem Gas entgegensetzt, ist im Wesentlichen bestimmt durch die Länge des ersten Abschnitts. Indem diese nach Bedarf variiert wird, sind bei vorgegebener Position und Anzahl der Düsen in dem Führungselement unterschiedliche Gasverbrauchsraten realisierbar. Die abzutragende Materialmenge wächst im Wesentlichen nur linear mit der Dicke des Führungselements, so dass die Bohrungen auch in einem dicken Führungselement mit vertretbarem Zeitaufwand gefertigt werden können. Da der Bohrungsdurchmesser an der von dem bewegbaren Körper abgewandten Oberfläche, also im körperfernen Bereich, nicht mit der Dicke des Führungselements zunimmt, besteht auch bei einem dicken Führungselement keine Gefahr, dass benachbarte Bohrungen einander überschneiden und das Führungselement unvertretbar schwächen.

Das Führungselement kann planar sein und eine gasgelagerte Bewegung des Körpers in zwei Freiheitsgraden gestatten; vorzugsweise führt sie allerdings den Körper linear mit einem einzigen Freiheitsgrad und umgibt ihn ringsum in einem Schnitt quer zur Führungsrichtung. Vorzugsweise hat das Führungselement die Form eines zylindrischen Rohrs.

Die Querschnittsflächen beider Abschnitte sind über ihre Länge hinweg im Wesentlichen konstant.

Der erste Abschnitt hat einen Durchmesser im Bereich von 10 bis 40 $\mu$m. Der Durchmesser des zweiten Abschnitts ist vorzugsweise wenigstens zweimal so groß.

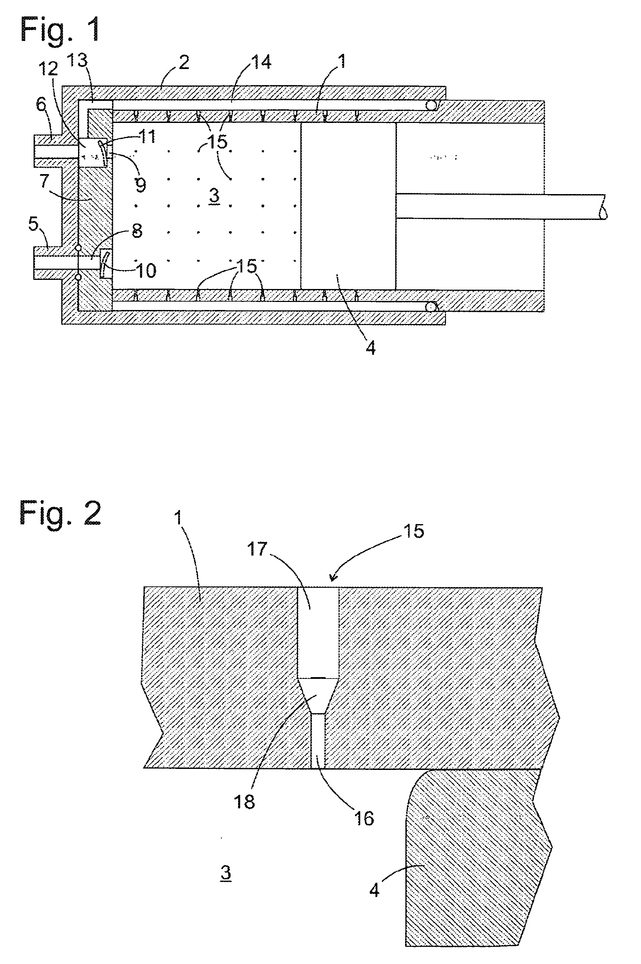

Aufgrund der unterschiedlichen Durchmesser des ersten und zweiten Abschnitts kann die Bohrung zweckmäßigerweise im Übergangsbereich vom ersten zum zweiten Abschnitt einen dritten Abschnitt aufweisen, der beispielsweise schräg verlaufen kann. Diese Schräge führt zu einem im Wesentlichen kegelförmigen dritten Abschnitt und bildet einen kontinuierlichen Übergang zwischen dem ersten und zweiten Abschnitt (siehe Fig. 2). Indem die Querschnittsfläche vom ersten zum zweiten hin kontinuierlich zunimmt, wird erreicht, den Gasstrom laminar, ohne unnötige Turbolenz, in den ersten Abschnitt hineinzuführen.

Der dritte Abschnitt kann jedoch auch stufen- bzw. sprungförmig ausgebildet sein, wenn der erste und der zweite Abschnitt im Wesentlichen direkt aneinander grenzen bzw. aufeinander treffen.

Für beide zuvor beschriebene Varianten gilt, dass der körpernahe erste Abschnitt der Bohrungen, also der den Körper führenden Oberfläche zugewandte Abschnitt, eine Querschnittsfläche aufweist, die größer ist als die Querschnittsfläche des körperfernen zweiten Abschnitts, also des der den Körper führenden Oberfläche abgewandten Abschnitts.

Das Führungselement hat vorzugsweise eine Stärke von wenigstens 0,5 mm, sie kann auch 1 mm oder mehr betragen.

Einer bevorzugten Ausführungsform zufolge ist ein Linearverdichter zum Verdichten von Kältemittel mit einem aerostatischen Lager gemäß der vorher genannten Ausführungsformen vorgesehen.

Vorzugsweise bildet der Körper einen Kolben und das Führungselement eine Zylinderwand dieses Linearverdichters.

Darüber hinaus ist ein Kältegerät, und insbesondere ein Kühl- und/oder Gefriergerät vorgesehen, das den zuvor genannten Linearverdichter umfasst. Diese beispielhafte Verwendung ist als nicht einschränkend anzusehen, sondern soll vielmehr eine mögliche Anwendung angeben.

Es ist jedoch auch vorstellbar, die erfindungsgemäßen aerostatischen Lager in jeder anderen geeigneten Vorrichtung vorzusehen, welche hier nicht explizit erwähnt werden.

Die zweite Aufgabe wird gelöst durch ein Verfahren gemäß Anspruch 12. Dies ermöglicht das Bohren des ersten und des zweiten Abschnitts mit in etwa gleichen Vortriebsgeschwindigkeiten, trotz unterschiedlicher pro Längeneinheit der Bohrung zu entfernender Materialmengen. So ist die zum Erzeugen einer Bohrung erforderliche Zeit im Wesentlichen nur linear von der Dikke des Elements abhängig.

Die zum Bohren des zweiten Abschnitts eingesetzte Laserstrahlleistung und/oder Laserstrahl-Pulsenergie beträgt wenigstens das Doppelte der zum Bohren des ersten Abschnitts eingesetzten Laserstrahlleistung und/oder Laserstrahl-Pulsenergie.

Vorzugsweise wird ein gleicher Laser zum Bohren des ersten und des zweiten Abschnitts verwendet. So entfällt die Notwendigkeit, zwei Laserstrahlen auf den Ort einer gleichen Bohrung auszurichten, und die zum Erzeugen der Bohrungen erforderlichen Arbeitszeiten können weiter reduziert werden.

Aus dem gleichen Grund werden zweckmäßigerweise der erste und der zweite Abschnitt von einer gleichen Seite des Elements aus gebohrt. Der querschnittsgrößere zweite Abschnitt wird zweckmäßigerweise vor dem ersten gebohrt.

Der Laserstrahl ist vorzugsweise auf eine von seiner Quelle abgewandte Oberfläche des Elements fokussiert, um in der Nähe dieser Oberfläche den engen ersten Abschnitt der Bohrung erzeugen zu können.

Wenn die Impulsenergie und/oder -leistung des Laserstrahls nach dem Bohren des zweiten Abschnitts allmählich reduziert wird, kann am Boden des ersten Bohrungsabschnitts ein dritter, sich in die Tiefe verjüngender dritter Bohrungsabschnitt erhalten werden, an den sich später der erste Abschnitt anschließen kann.

Um während des Bohrens von dem Element abgetragenes Material zu beseitigen, und um gegebenenfalls eine den Laserstrahl führende Optik vor Verschmutzung durch das abgetragene Material zu schützen, ist vorzugsweise während des Bohrens ein Gasstrom aus der Richtung des Laserstrahls gegen die Oberfläche der Platte gerichtet.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1     einen schematischen Schnitt durch ein aerostatisches Lager;

Fig. 2     ein vergrößertes Detail des Lagers aus Fig. 1; und

Fig. 3     eine schematische Darstellung einer Vorrichtung zum Erzeugen der in Fig. 2 gezeigten Bohrungen.

Das in Fig. 1 in einem axialen Schnitt gezeigte aerostatische Lager umfasst ein zylindrisches Rohrstück 1 und einen über ein Ende des Rohrstücks 1 gestülpten Becher 2, die zusammen eine Verdichterkammer 3 eines Linearverdichters begrenzen, und einen in dem Rohrstück 1 hin und her beweglichen Kolben 4. Am Boden des Bechers 2 stehen ein Ansaugstutzen 5 und ein Auslassstutzen 6 ab. Eine Ventilplatte 7 im Inneren des Bechers 2 bildet eine Stirnseite der Verdichterkammer 3. Die Ventilplatte 7 hat mit den Stutzen 5, 6 fluchtende Bohrungen 8, 9, die jeweils ein Rückschlagventil 10, 11 aufnehmen. Die Rückschlagventile 10, 11 sind hier jeweils durch elastische Zungen gebildet, die in entspanntem Zustand an einem durch eine Schulter der Bohrung 8 bzw. 9 gebildeten Ventilsitz anschlagen; andere Bauformen von Rückschlagventilen kommen ebenfalls in Betracht.

Von einer zwischen dem Rückschlagventil 11 und dem Auslassstutzen 6 angeordneten Kammer 12 der Bohrung 9 erstreckt sich eine Verbindungsleitung 13 zu einem ringförmigen Hohlraum 14, dessen Innenwand durch das Rohrstück 1 und dessen Außenwand durch den Becher 2 gebildet ist. Der Hohlraum 14 kommuniziert mit der Verdichterkammer 3 über eine Vielzahl von sich radial durch die Wand des Rohrstücks 1 erstreckenden Bohrungen 15.

Wenn der Verdichter in Betrieb ist und der Kolben 4 sich in der Verdichterkammer 3 hin und her bewegt, erzeugt er einen Überdruck in der Kammer 12, der sich über die Verbindungsleitung 13 in den Hohlraum 14 ausbreitet. Eine Druckdifferenz zwischen dem Hohlraum 14 und der Verdichterkammer 3 treibt einen Strom des verdichteten Gases durch die Bohrungen 15 an, der ein Gaskissen zwischen der Innenseite des Rohrstücks 1 und dem Kolben 4 erzeugt und so eine berührungslose Bewegung des Kolbens 4 ermöglicht.

Die Bohrungen 15 in der Wand des Rohrstücks 1 haben jeweils die in der vergrößerten Ansicht der Fig. 2 gezeigte Gestalt. Ein erster, enger Abschnitt 16 der Bohrung erstreckt sich von der inneren Oberfläche des Rohrstücks 1 aus, ein zweiter, weiterer Abschnitt 17 von der äußeren Oberfläche her. Die Querschnittsflächen beider Abschnitte 16, 17 sind über ihre Länge hinweg im Wesentlichen konstant; zwischen beiden befindet sich ein kegelförmiger dritter Abschnitt 18 und bildet einen kontinuierlichen Übergang zwischen den Abschnitten 16, 17.

Der Durchmesser des ersten Abschnitts 16 beträgt 20 bis 30 $\mu$m, der des zweiten Abschnitts 17 beträgt maximal 60 $\mu$m bei einer Wandstärke des Rohrstücks 1 von 0,6 mm bzw. maximal 100 $\mu$m bei einer Wandstärke des Rohrstücks 1 von 1 mm.

Der Gasdurchfluss durch eine solche Bohrung 15 hängt bei gegebenen Durchmessern der Abschnitte im Wesentlichen von der Länge des ersten Abschnitts 16 ab. Der Gasverbrauch des aerostatischen Lagers, das heißt, die Menge an verdichtetem Gas, die zur Aufrechterhaltung der Lagerwirkung benötigt wird und nicht am Auslassstutzen 6 des Verdichters in Fig. 1 abgreifbar ist, kann bei vorgegebener Wandstärke des Rohrstücks 1 und vorgegebener Anzahl und Verteilung der Bohrungen 15 durch geeignete Festlegung der Länge des ersten Abschnitts 16 eingestellt werden.

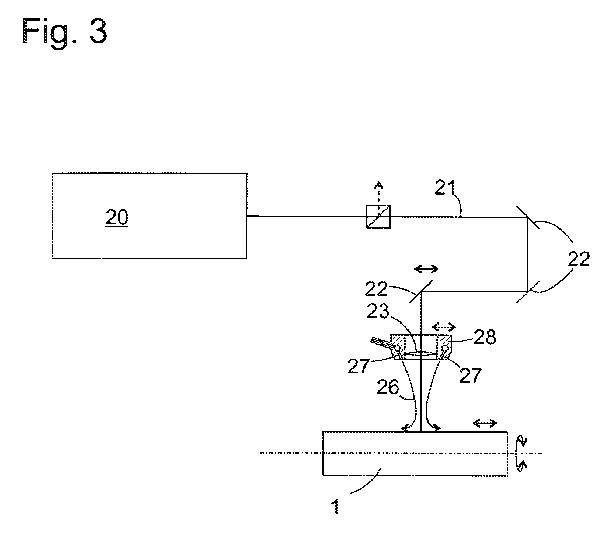

Fig. 3 zeigt schematisch einen Aufbau, mit dem die Bohrungen 15 in dem Rohrstück 1 erzeugt werden können. Der Aufbau umfasst einen gütegeschalteten Laser 20, der in der Lage ist, Laserimpulse mit einer Impulsdauer von 10 bis 80 Nanosekunden und einem Energiegehalt von 3 Millijoule oder mehr zu liefern. Es kommen diverse Typen von Festkörper- und Gaslasern, zum Beispiel Nd:YAG-Laser oder Excimer-Laser, in Betracht, die einen im Wesentlichen beugungsbegrenzten Strahl hoher Qualität liefern. Die Wellenlänge des Laserstrahls kann im nahen infraroten, im sichtbaren oder im ultravioletten Spektralbereich liegen, wobei kurzwellige Lasertypen aufgrund ihrer bei vorgegebener Strahltaille längeren Rayleigh-Zone bevorzugt sind.

Der Strahl 21 des ortsfesten Lasers 20 wird über Spiegel 22 und eine Linse 23 auf die Außenseite des Rohrstücks 1 geführt. Um die Leistung bzw. Pulsenergie des Laserstrahls 21 am Rohrstück 1 variieren zu können, ist ein drehbarer Strahlteiler-Polarisator am Ausgang des Lasers 20 angeordnet, um einen je nach Orientierung unterschiedlichen Anteil aus dem Strahl 21 auszukoppeln. Generell wäre es auch möglich, durch Variieren der dem Laser 20 zugeführten Pumpenergie oder mit Hilfe eines in den Strahlengang eingeführten Absorptionsfilters die Energie des Laserstrahls 21 zu variieren, doch hat die Verwendung des Polarisators den Vorteil, dass thermische Linseneffekte, die die Qualität des Strahls und damit Durchmesser und Lage der Strahltaille beeinflussen könnten, weitgehend vermieden werden.

Der Abstand der Linse 23 von dem Rohrstück 1 ist so eingestellt, dass sie den Laserstrahl 21 in Höhe der inneren Oberfläche des Rohrstücks 1 fokussiert. Die Brennweite der Linse 23 ist so gewählt, dass die Rayleigh-Zone, d.h. der Abstand zwischen der Strahltaille und der Stelle, an der der Strahldurchmesser auf das $\sqrt{2}$ -fache des Taillenwerts zugenommen hat, wenigstens so groß ist wie die Wandstärke des Rohrstücks 1.

Um eine Bohrung 15 in dem Rohrstück 1 zu erzeugen, wird zunächst der Polarisator auf maximale Transmission eingestellt, und eine Mehrzahl von Laserpulsen wird auf die Oberfläche des Rohrstücks 1 eingestrahlt. Durch die Laserpulse verflüssigtes und verdampftes Metall des Rohrstücks 1 wird mit Hilfe eines Schutzgasstrahls 26 vom Bohrloch fortgeblasen, der aus rings um die Linse 23 angeordneten Öffnungen 27 eines Bearbeitungskopfs 28 parallel zum Laserstrahl 21 austritt. Die Tiefe des dabei erzeugten Bohrlochs, d.h. des Abschnitts 17, ist im Wesentlichen proportional zur Anzahl der eingestrahlten Laserpulse.

Da der Fokus des Strahls 21 in Höhe der inneren Oberfläche des Rohrstücks 1 liegt, verringert sich streng genommen bei zunehmender Tiefe der Bohrung der Durchmesser des Flecks am Boden der Bohrung, in dem die Leistungsdichte des Strahls 21 hoch genug ist, um Material abzutragen. Da die Rayleigh-Zone aber wenigstens so lang ist, wie die Wand des Rohrabschnitts 1 stark ist, ist eine daraus eventuell resultierende Änderung des Durchmessers über die Länge des Abschnitts 17 hinweg klein gegenüber dem Durchmesser und vernachlässigbar.

Nachdem eine gewünschte Anzahl von Laserimpulsen bei voller Leistung auf das Rohrstück 1 abgegeben worden ist, wird der Polarisator gedreht, um den Energiegehalt der Impulse auf die Hälfte oder weniger zu reduzieren. Die Energie von Laserimpulsen, die vom Laser 20 während des Verstellens des Polarisators abgegeben werden, nimmt kontinuierlich ab. Infolge der abnehmenden Impulsenergie verengt sich der die Achse des Strahls 21 umgebende Bereich, in dem die Leistungsdichte des Strahls 21 ausreicht, um das Metall des Rohrstücks 1 zu verflüssigen oder zu verdampfen. So entsteht während des Drehens des Polarisators der kegelförmige Abschnitt 18.

Durch anschließend mit konstanter, niedrigerer Energie auf das Rohrstück 1 eingestrahlte Impulse wird der engere Abschnitt 16 erhalten. Da dieser Abschnitt in unmittelbarer Nähe des Brennpunkts liegt, verändert sich der Strahldurchmesser über die Länge des Abschnitts 16 hinweg nur in vernachlässigbarem Maße, und dementsprechend ist auch der Durchmesser des Abschnitts 16 gut konstant.

Um nacheinander sämtliche in axialer Richtung und in Umfangsrichtung verteilten Bohrungen 15 des Rohrstücks 1 zu erzeugen, ist das Rohrstück um seine Längsachse drehbar gelagert, und entweder das Rohrstück 1 oder der Bearbeitungskopf 28 ist parallel zur Längsachse des Rohrstücks 1 verschiebbar, wie in Fig. 3 jeweils durch Pfeile angedeutet.

Prinzipiell sind durch eine entsprechende Auswahl des Verhältnisses der Pulsenergien stark unterschiedliche Verhältnisse zwischen den Durchmessern der Abschnitte 16 und 17 realisierbar. Um den Strömungswiderstand des Abschnitts 17 klein gegenüber dem des Abschnitts 16 zu machen, genügt ein Durchmesserverhältnis von 2:1. Größere Durchmesserverhältnisse können bei hohen Wandstärken erforderlich sein, um die Beseitigung des geschmolzenen Metalls aus dem Bohrloch auch bei großer Tiefe desselben sicherstellen zu können. Während zum Beispiel bei einer Wanddicke des Rohrstücks 1 von 0,6 mm und einem Durchmesser des Abschnitts 16 von 20 bis 30 $\mu$m ein Durchmesser des Abschnitts 17 von bis zu 60 $\mu$m zweckmäßig ist, wird man bei einer Wanddicke von 1 mm bei gleichem Durchmesser des Abschnitts 16 eher einen Durchmesser des Abschnitts 17 von bis zu 100 $\mu$m wählen.

**Patentansprüche**

1. Aerostatisches Lager mit einem mit Bohrungen (15) versehenen Führungselement (1) und einem entlang einer Oberfläche des Führungselements (1) bewegbaren Körper (4), wobei die Bohrungen (15) einen körpernahen ersten Abschnitt (16) umfassen, der eine über seine Länge hinweg im Wesentlichen konstante Querschnittsfläche aufweist, wobei die Bohrungen einen körperfernen zweiten Abschnitt (17) mit einer über seine Länge hinweg im Wesentlichen konstanten zweiten Querschnittsfläche umfassen, die größer als die Querschnittsfläche des ersten Abschnitts ist, **dadurch gekennzeichnet, dass** der erste Abschnitt (16) einen Durchmesser von 10 bis 40 $\mu$m aufweist.

2. Aerostatisches Lager nach Anspruch 1, **dadurch gekennzeichnet, dass** der zweite Abschnitt (17) einen wenigstens zweimal so großen Durchmesser wie der erste Abschnitt (16) hat.

3. Aerostatisches Lager nach Anspruch 1 oder 2, **dadurch gekennzeichnet, dass** zwischen dem ersten (16) und dem zweiten Abschnitt (17) ein dritter Abschnitt (18) vorgesehen ist.

4. Aerostatisches Lager nach Anspruch 3, **dadurch gekennzeichnet, dass** die Querschnittsfläche des dritten Abschnitts vom ersten (16) zum zweiten Abschnitt (17) hin kontinuierlich zunimmt.

5. Aerostatisches Lager nach Anspruch 3, **dadurch gekennzeichnet, dass** der dritte Abschnitt (18) zum Verbinden des ersten und zweiten Abschnitts stufen- bzw. sprungförmig ausgebildet ist.

6. Aerostatisches Lager nach einem der vorhergehenden Ansprüche, **dadurch gekennzeichnet, dass** das Führungselement (1) den Körper (4) linear führt und ihn in einem Schnitt quer zur Führungsrichtung ringsum umgibt.

7. Aerostatisches Lager nach einem der vorhergehenden Ansprüche, **dadurch gekennzeichnet, dass** das Führungselement (1) ein zylindrisches Rohr ist.

8. Aerostatisches Lager nach einem der vorhergehenden Ansprüche, **dadurch gekennzeichnet, dass** das Führungselement (1) eine Stärke von wenigstens 0,5 mm aufweist.

9. Linearverdichter zum Verdichten von Kältemittel mit einem aerostatischen Lager nach einem der vorhergehenden Ansprüche.

10. Linearverdichter nach Anspruch 9, **dadurch gekennzeichnet, dass** der Körper (4) einen Kolben und das Führungselement (1) eine Zylinderwand des Linearverdichters bilden.

11. Kältegerät, insbesondere ein Kühl- und/oder Gefriergerät, mit einem Linearverdichter nach Anspruch 9 oder 10.

12. Verfahren zum Herstellen einer Bohrung (15) in einem Element (1), insbesondere in einem Führungselement (1) eines aerostatischen Lagers nach einem der vorhergehenden Ansprüche, unter Verwendung eines Laserstrahls (21), wobei zum Bohren eines ersten Abschnitts (16) der Bohrung (15) eine geringere Laserstrahlleistung und/oder geringere Laserstrahl-Pulsenergie verwendet wird als zum Bohren eines zweiten Abschnitts (17), der einen größeren Querschnitt als der erste Abschnitt (16) hat, **dadurch gekennzeichnet, dass** die zum Bohren des zweiten Abschnitts (17) eingesetzte Laserstrahlleistung und/oder Laserstrahl-Pulsenergie wenigstens das Doppelte der zum Bohren des ersten Abschnitts (16) eingesetzten Laserstrahlleistung und/oder Laserstrahl-Pulsenergie beträgt.

**13.** Verfahren nach Anspruch 12, **dadurch gekennzeichnet, dass** ein gleicher Laser (20) zum Bohren des ersten und des zweiten Abschnitts (16, 17) verwendet wird.

**14.** Verfahren nach Anspruch 12 oder 13, **dadurch gekennzeichnet, dass** der erste und der zweite Abschnitt (16, 17) von einer gleichen Seite des Element (1) aus gebohrt werden.

**15.** Verfahren nach einem der Ansprüche 12 bis 14, **dadurch gekennzeichnet, dass** der zweite Abschnitt (17) vor dem ersten (16) gebohrt wird.

**16.** Verfahren nach einem der Ansprüche 12 bis 15, **dadurch gekennzeichnet, dass** der Laserstrahl (21) auf eine von ihm abgewandte Oberfläche des Elements (1) fokussiert wird.

**17.** Verfahren nach einem der Ansprüche 12 bis 16, **dadurch gekennzeichnet, dass** die Impulsenergie und/oder Leistung nach dem Bohren des zweiten Abschnitts (17) allmählich reduziert wird.

**18.** Verfahren nach einem der Ansprüche 12 bis 17, **dadurch gekennzeichnet, dass** während des Bohrens ein Gasstrom (26) aus der Richtung des Laserstrahls (21) gegen die Oberfläche des Elements (1) gerichtet wird.

**Claims**

**1.** Aerostatic bearing with a guide element (1), which is provided with bores (15), and a body (4) movable along a surface of the guide element (1), wherein the bores (15) have a first section (16), which is near the body and has a substantially constant cross-sectional area over its length, wherein the bores have a second section (17), which is remote from the body, with a second cross-sectional area, which is substantially constant over its length and which is greater than the cross-sectional area of the first section, **characterised in that** the first section (16) has a diameter of 10 to 40 microns.

**2.** Aerostatic bearing according to claim 1, **characterised in that** the second section (17) has a diameter at least twice as large as the first section (16).

**3.** Aerostatic bearing according to claim 1 or 2, **characterised in that** a third section (18) is provided between the fist section (16) and the second section (17).

**4.** Aerostatic bearing according to claim 3, **characterised in that** the cross-sectional area of the third section continuously increases from the first section (16) towards the second section (17).

**5.** Aerostatic bearing according to claim 3, **characterised in that** the third section (18) is constructed to be step-shaped or stepped for connection of the first and second sections.

**6.** Aerostatic bearing according to any one of the preceding claims, **characterised in that** the guide element (1) linearly guides the body (4) and annularly surrounds it in a section transverse to the guide direction.

**7.** Aerostatic bearing according to any one of the preceding claims, **characterised in that** the guide element (1) is a cylindrical tube.

**8.** Aerostatic bearing according to any one of the preceding claims, **characterised in that** the guide element (1) has a thickness of at least 0.5 millimetres.

**9.** Linear compressor for compressing refrigerant with an aerostatic bearing according to any one of the preceding claims.

**10.** Linear compressor according to claim 9, **characterised in that** the body (4) forms a piston and the guide element (1) forms a cylinder wall of the linear compressor.

**11.** Refrigerating appliance, particularly a refrigerating and/or freezing appliance, with a linear compressor according to claim 9 or 10.

**12.** Method for producing a bore (15) in an element (1), particularly in a guide element (1) of an aerostatic bearing according to any one of the preceding claims, with use of a laser beam (21), wherein for boring a first section (16) of the bore (15) use is made of a lower laser beam power and/or lower laser beam pulse energy than for boring a second section (17), which has a larger cross-section than the first section (16), **characterised in that** the laser beam power and/or laser beam pulse energy used for boring the second section (17) has or have at least twice the laser beam power and/or laser beam pulse energy used for boring the first section (16).

**13.** Method according to claim 12, **characterised in that** use is made of the same laser (20) for boring the first and second sections (16, 17).

**14.** Method according to claim 12 or 13, **characterised in that** the first and second sections (16, 17) are bored from the same side of the element (1).

**15.** Method according to any one of claims 12 to 14, **characterised in that** the second section (17) is bored before the first section (16).

**16.** Method according to any one of claims 12 to 15, **characterised in that** the laser beam (21) is focused on a surface of the element (1) facing away therefrom.

**17.** Method according to any one of claims 12 to 16, **characterised in that** the pulse energy and/or power is or are gradually reduced after boring the second section (17).

**18.** Method according to any one of claims 12 to 17, **characterised in that** during the boring a gas flow (26) is directed from the direction of the laser beam (21) against the surface of the element (1).

**Revendications**

**1.** Palier aérostatique comprenant un élément de guidage (1) muni de trous forés (15) et un corps (4) déplaçable le long d'une surface de l'élément de guidage (1), les trous forés (15) comprenant une première section (16) proche du corps, laquelle présente une aire de la section transversale essentiellement constante sur toute sa longueur, les trous forés comprenant une deuxième section (17) éloignée du corps dotée d'une aire de la section transversale essentiellement constante sur toute sa longueur, laquelle est plus grande que l'aire de la section transversale de la première section, **caractérisé en ce que** la première section (16) présente un diamètre de 10 à 40 μm.

**2.** Palier aérostatique selon la revendication 1, **caractérisé en ce que** la deuxième section (17) a un diamètre au moins deux fois aussi grand que la première section (16).

**3.** Palier aérostatique selon la revendication 1 ou 2, **caractérisé en ce qu'**une troisième section (18) est ménagée entre la première (16) et la deuxième section (17).

**4.** Palier aérostatique selon la revendication 3, **caractérisé en ce que** l'aire de la section transversale de la troisième section augmente en continu de la première (16) vers la deuxième section (18).

**5.** Palier aérostatique selon la revendication 3, **caractérisé en ce que** la troisième section (18) est réalisée en forme d'escalier resp. de saut pour relier la première et la deuxième sections.

**6.** Palier aérostatique selon l'une quelconque des revendications précédentes, **caractérisé en ce que** l'élément de guidage (1) guide le corps (4) linéairement et l'entoure tout autour dans une coupe transversale au sens de guidage.

**7.** Palier aérostatique selon l'une quelconque des revendications précédentes, **caractérisé en ce que** l'élément de guidage (1) est un tube cylindrique.

**8.** Palier aérostatique selon l'une quelconque des revendications précédentes, **caractérisé en ce que** l'élément de guidage (1) présente une épaisseur d'au moins 0,5 mm.

**9.** Compresseur linéaire destiné à comprimer un agent frigorifique, comprenant un palier aérostatique selon l'une quelconque des revendications précédentes.

**10.** Compresseur linéaire selon la revendication 9, **caractérisé en ce que** le corps (4) forme un piston et **en ce que** l'élément de guidage (1) forme une paroi de cylindre du compresseur linéaire.

**11.** Appareil frigorifique, notamment appareil réfrigérateur et/ou congélateur, comprenant un compresseur linéaire selon la revendication 9 ou 10.

**12.** Procédé de fabrication d'un trou foré (15) dans un élément (1), notamment dans un élément de guidage (1) d'un palier aérostatique selon l'une quelconque des revendications précédentes, avec utilisation d'un rayon laser (21), une puissance du rayon laser plus petite et/ou une énergie d'impulsion du rayon laser plus petite étant utilisées pour percer une première section (16) du trou foré (15) que pour percer une deuxième section (17) qui a une section transversale plus grande que la première section (16), **caractérisé en ce que** la puissance du rayon laser et/ou l'énergie d'impulsion du rayon laser utilisées pour percer la deuxième section (17) sont au moins le double de la puissance du rayon laser et/ou de l'énergie d'impulsion du rayon laser utilisées pour percer la première section (16).

**13.** Procédé selon la revendication 12, **caractérisé en ce qu'**un laser identique (20) est utilisé pour percer la première et la deuxième sections (16, 17).

**14.** Procédé selon la revendication 12 ou 13, **caractérisé en ce que** la première et la deuxième sections (16, 17) sont percées depuis un même côté de l'élément (1).

**15.** Procédé selon l'une quelconque des revendications 12 à 14, **caractérisé en ce que** la deuxième section (17) est percée avant la première (16).

**16.** Procédé selon l'une quelconque des revendications 12 à 15, **caractérisé en ce que** le rayon laser (21) est focalisé sur une surface de l'élément (1) détournée de lui.

**17.** Procédé selon l'une quelconque des revendications 12 à 16, **caractérisé en ce que** l'énergie d'impulsion et/ou la puissance sont réduites progressivement après le perçage de la deuxième section (17).

**18.** Procédé selon l'une quelconque des revendications 12 à 17, **caractérisé en ce que** pendant le perçage un courant de gaz (26) en provenance de la direction du rayon laser (21) est dirigé contre la surface de l'élément (1).

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4436156 C1

- WO 2004055400 A1